# FASCICULE DE BREVET EUROPEEN

(11) **EP 0 731 016 B1**
(45) Date de publication et mention de la délivrance du brevet: **18.10.2000**
(21) Numéro de dépôt: 96390001.4
(22) Date de dépôt: 01.03.1996
(51) Int. Cl.: B62D 35/00

(54) **Véhicule à dispositif déflecteur formant écran d'air avant**
Fahrzeug mit einem Abweiser, der eine Frontwind-Abschirmung bildet
Vehicle with a deflector forming a front wind screen

(30) Priorité: 06.03.1995 FR 9502891
(43) Date de publication de la demande: 11.09.1996
(73) Titulaire: Fior, Claude, 32110 Nogaro (FR)
(72) Inventeur: Fior, Claude, 32110 Nogaro (FR)
(74) Mandataire: Cabinet BARRE LAFORGUE & associés

(56) Documents cités:
- DE-C- 734 711
- DE-U- 7 138 183
- FR-A- 779 034
- FR-A- 1 287 971
- FR-A- 1 564 532

## Description

L'invention concerne un véhicule à dispositif déflecteur d'air formant écran d'air avant, destiné à se déplacer à vitesse subsonique comprenant des moyens tels qu'un habitacle, un siège, une selle, etc., définissant au moins une place avant pour au moins un occupant, c'est-à-dire au moins un espace d'accueil de pilote(s) et/ou de passager(s) qui n'est pas précédé vers l'avant dans la direction de déplacement du véhicule, par une autre place en regard de pilotage et/ou de passager.

Les véhicules connus sont soit équipés d'un pare-brise, c'est-à-dire d'une paroi transparente interposée dans le champ de vision de la(des) place(s) avant (voiture, avions, bateaux de tourisme ou de sport, etc.), soit exempts de tout pare-brise ou déflecteur (véhicules à deux roues, karts, etc.), soit équipés d'un carénage ou d'un déflecteur destiné à améliorer les qualités aérodynamiques du véhicule (notamment en diminuant la traînée) et parfois à limiter la pression d'air sur l'(les) occupant(s) de la(des) place(s) avant résultant du déplacement du véhicule (motocyclettes, side-cars, voitures ou bateaux à moteurs, de compétition, etc.).

Lorsque le véhicule est équipé d'un pare-brise, le(les) occupant(s) de la(des) place(s) avant ne portent) en général ni casque, ni lunettes.

Par contre, dans les deux derniers cas susmentionnés l'(les) occupant(s) reçoive(nt) directement au moins une partie du courant d'air dû au déplacement. En particulier, le port d'un casque à visière ou de lunettes est indispensable pour assurer le confort visuel de l'(des) occupant(s).

De nombreux systèmes à ailes ou grilles d'ailes ont déjà été proposés dans le passé en association avec un véhicule, et dans divers buts, mais aucun d'entre eux n'est exploité. Ainsi, DE-C-734 711 décrit un perfectionnement à un dispositif réduisant la résistance à l'avancement d'un objet tel qu'un véhicule dans l'air comprenant des ailes de déviation avancés dotées d'une ou plusieurs ouvertures à travers lesquelles se produit l'alimentation en air de l'espace mort entre les surfaces avant et la partie avant du véhicule à protéger. Ce perfectionnement est caractérisé en ce que des ailes courbes convexes disposées à l'arrière régulent l'écartement de l'air de l'espace mort, et/ou en ce que les ouvertures divergentes vers l'arrière pour l'alimentation de la zone d'air calme sont subdivisées en buses juxtaposées par des ailes intermédiaires. Une partie du courant d'air n'est pas déviée, mais la combinaison des surfaces avant et arrière crée une voûte d'air qui empêche le vent latéral de s'introduire entre elles (page 2, lignes 15-30). Ce document qui visait la protection latérale des passagers à l'époque où les véhicules ne se déplaçaient que lentement n'envisageait pas la suppression du pare-brise du véhicule. En outre, ce document considère comme indispensable de prévoir, à l'arrière des ailes avant de déviation, des ouvertures d'alimentation en air de la zone d'air calme.

Par ailleurs, on connaît déjà aussi d'autres dispositifs déviant l'air à l'avant d'un pare-brise pour éviter qu'il ne se salisse trop rapidement ou pour créer une zone de calme au niveau de la place de l'utilisateur d'un véhicule découvert. Ainsi, l'état de la technique le plus pertinent FR-1 287 971 décrit un déflecteur tel qu'un pare-brise créant un canal d'air forcé de section décroissante, comprenant deux éléments courbes séparés dont l'un est fixé par des montants solidaires de la carosserie et l'autre est fixé par des entretoises sur le premier. Les éléments courbes et les cloisons disposées entre eux sont transparents.

Ainsi, une paroi de protection est le plus souvent interposée entre les yeux de l'(des) occupant(s) et l'extérieur. On considère en effet de façon générale depuis toujours que l'absence de paroi de protection (pare-brise ou lunettes) devant les yeux n'est possible qu'avec les véhicules se déplaçant à vitesse très faible (bicyclettes, bateaux à voile, etc.).

Dans ce contexte, l'invention vise à proposer une nouvelle catégorie de véhicules pouvant se déplacer à toute vitesse subsonique, qui ne comporte pas de paroi devant les yeux de l'(des) occupant(s) dans la direction de déplacement du véhicule, mais qui assure néanmoins le confort, notamment visuel, de l'(des) occupant(s).

L'invention vise ainsi à proposer une nouvelle catégorie de véhicules procurant des sensations nouvelles résultant d'un confort étonnant à toute vitesse malgré l'absence de pare-brise devant les yeux.

A ce titre, l'invention vise à proposer un véhicule exempt de paroi de protection devant les yeux de l'(des) occupant(s) mais qui peut être utilisé, y compris à des vitesses importantes (300 km/h ou plus), sans turbulences ni courant d'air dans la totalité ou la plus grande partie de l'espace d'occupation de la (des) place(s) avant.

Plus particulièrement, l'invention vise à proposer un tel véhicule qui peut être utilisé les yeux ouverts sans lunettes ni visière par l'(les) occupant(s) de la(des) place(s) avant.

L'invention vise aussi à proposer un tel véhicule exempt de pare-brise ou de paroi dans le champ de vision de l'(des) occupant(s).

L'invention vise plus particulièrement à proposer un véhicule tel qu'une voiture avec lequel le champ de vision vers l'avant de l'(les) occupant(s) est totalement libre mais dans lequel l'(les) occupant(s) est(sont) protégé(s) des turbulences et des courants d'air, notamment au moins jusqu'à la hauteur des yeux.

L'invention vise en outre à proposer un véhicule avec lequel ces résultats sont atteints de façon économique et particulièrement esthétique.

Pour ce faire, l'invention concerne un véhicule conforme à la revendication 1.

Selon l'invention, la surface déflectrice a pour fonction de canaliser et de conduire au moins une fraction substantielle du courant d'air relatif vers le haut et au contact de l'extrados de l'aile. Avantageusement et selon l'invention, la surface déflectrice est associée solidaire de façon étanche à une portion transversale avant de carrosserie et/ou de châssis.

On entend par l'expression "la surface déflectrice est associée de façon étanche" le fait que normalement aucun courant d'air intempestif ne passe sous cette surface déflectrice (entre elle et l'élément auquel elle est associée). Néanmoins, cette notion n'exclut pas la possibilité de prévoir des prises d'air ou des évents de faibles dimensions tels que des évents d'aération contrôlée des passagers, dès lors que ces prises d'air ou évents n'empêchent pas à la surface déflectrice d'exercer sa fonction de création du flux d'air dévié avec une énergie suffisante.

On sait que pour tout véhicule dont les moyens définissant la(les) place(s) avant sont déterminés, la réglementation définit une zone normalisée dans laquelle l'emplacement des yeux d'un occupant de taille normalisée peut varier. En effet, les places des véhicules sont conçues et dimensionnées en fonction d'occupants de taille normalisée.

En particulier, le niveau normalisé horizontal supérieur des yeux d'une personne occupant ladite place avant correspond à la hauteur maximum que peuvent prendre les yeux d'un mannequin de taille normalisée correspondant au véhicule.

Il a ainsi été déterminé de façon surprenante que la simple combinaison d'une surface déflectrice concave et d'au moins une aile placée immédiatement en amont en regard et au voisinage de la surface déflectrice dans le courant d'air relatif, permet d'obtenir une protection très efficace de l'occupant en créant un espace qui s'étend à l'arrière et au-dessus de la surface déflectrice en englobant au moins ladite zone normalisée d'emplacement des yeux, et dans lequel l'air est au moins sensiblement au repos, et en particulier ni laminaire, ni turbulent.

Cet espace dans lequel l'air est au repos correspond au moins substantiellement à l'espace d'occupation de ladite place avant, c'est-à-dire à l'espace occupé par un passager de taille normalisée occupant ladite place avant. Dans le cas d'une place assise, il s'agit donc de l'espace situé à l'avant du siège et dans lequel s'inscrit une personne de taille normalisée assise dans le siège. On entend par l'expression "correspondant au moins substantiellement", le fait que ledit espace dans lequel l'air est au repos, s'étend selon la plus grande partie de l'espace d'occupation. Néanmoins, cet espace peut ne pas correspondre tout à fait exactement à l'espace d'occupation, et notamment être légèrement moins large ou légèrement moins haut.

Selon l'invention, le dispositif déflecteur formé par la surface déflectrice et l'(les) aile(s) est adapté pour créer un flux d'air s'écoulant vers le haut en régime laminaire avec une énergie suffisante pour dévier tout le courant d'air relatif dû au déplacement du véhicule au-dessus de ladite zone normalisée d'emplacement des yeux, et plus particulièrement au-dessus de l'espace d'occupation de ladite place avant. Le courant d'air résultant passe donc au-dessus du plan horizontal supérieur passant par ladite zone normalisée d'emplacement des yeux en un point situé à l'avant de cette zone.

Le véhicule selon l'invention est en outre caractérisé en ce que l'ensemble du dispositif déflecteur formé par la surface déflectrice et l'(les) aile(s) s'étend sous la limite inférieure du champ de vision normalisé correspondant à ladite place avant, et est adapté pour que ledit flux d'air dévié s'écoule vers le haut et au-dessus de ladite zone normalisée d'emplacement des yeux, et en ce que le véhicule est exempt du pare-brise avant. Plus particulièrement, le courant d'air résultant s'écoule vers le haut et passe au-dessus de ladite zone à l'avant de cette zone.

De la sorte, malgré l'absence de pare-brise et de toute paroi à l'avant de ladite zone et des yeux de l'occupant, les yeux de l'occupant sont protégés et dans un espace calme à l'arrière de l'écran d'air formé par le flux d'air dévié.

La limite inférieure du champ de vision normalisé est un plan transversal qui passe par ladite zone normalisée d'emplacement des yeux et qui est tangente vers le bas à la portion de carrosserie du véhicule située à l'avant de ladite zone.

L'invention est plus particulièrement applicable à un véhicule comprenant une portion avant de carrosserie s'étendant à l'avant de la(des) place(s) avant en formant une surface continue au moins sensiblement horizontale entre la(les) place(s) avant et l'extrémité avant du véhicule, tel qu'une voiture automobile de tourisme ou de sport. Le véhicule selon l'invention est caractérisé en ce que la surface déflectrice s'étend en saillie vers le haut par rapport à la portion avant de carrosserie du véhicule dans le courant d'air relatif créé le long de la portion avant de carrosserie.

Le dispositif déflecteur formé de la surface déflectrice et de l'aile ou des ailes peut être fixé à tout endroit approprié du véhicule situé à l'avant de ladite place avant. Par exemple, ou pourrait envisager d'utiliser un tel dispositif déflecteur fixé au voisinage de la calandre avant d'une voiture. Néanmoins, avantageusement et selon l'invention, la surface déflectrice est fixée immédiatement à l'avant de ladite place avant dans le prolongement vers l'arrière de la partie arrière au moins sensiblement horizontale de la portion avant de carrosserie, c'est-à-dire le plus à l'arrière possible sur la portion avant de la carrosserie. Cette partie arrière de la portion avant de carrosserie constitue ledit élément transversal de carrosserie et/ou de châssis sus-mentionné.

Selon l'invention, la surface déflectrice comporte alors une partie avant de raccordement qui s'étend au moins sensiblement horizontalement vers l'avant et est reliée continûment tangentiellement dans le prolongement vers l'arrière de la partie arrière de la portion avant de carrosserie.

En outre, le dispositif déflecteur est placé vers l'avant par rapport à la zone normalisée des yeux et à l'espace d'occupation de la place avant, à une distance suffisante pour éviter tout contact avec l'occupant en cas d'accident. En particulier, le dispositif déflecteur est suffisamment bas et vers l'avant pour éviter tout choc avec la tête de l'occupant en cas d'accident.

Il est à noter, parmi les avantages de l'invention, que la sécurité des occupants est améliorée dans la mesure où aucune paroi n'est interposée à l'avant de la tête des occupants, le pare-brise étant supprimé. On sait en effet, que la présence du pare-brise dans les véhicules de l'art antérieur est une cause majeure de blessures graves en cas d'accident, notamment lorsque les occupants omettent de fixer leur ceinture de sécurité ou lorsque celles-ci sont défaillantes.

Un véhicule selon l'invention est caractérisé en ce que la surface déflectrice est profilée avec une section droite courante par tout plan vertical longitudinal qui est courbe, concave à concavité orientée vers l'avant et dont le bord de fuite est orienté vers le haut en formant un angle avec la direction verticale qui est inférieur à 45°, notamment inférieur à 10°.

Selon l'invention, le bord de fuite de la surface déflectrice est orienté au moins sensiblement verticalement, c'est-à-dire au moins sensiblement à 90° vers le haut par rapport au courant d'air relatif dû au déplacement du véhicule. Il est à noter que cette disposition s'oppose au préjugé admis selon lequel plus l'angle de fuite est important, plus l'on crée de turbulences. Ainsi, malgré un bord de fuite vertical ou quasi vertical, on arrive, grâce à l'invention et de façon surprenante, à créer un flux laminaire et à éviter toute turbulence à l'arrière de la surface déflectrice.

Avantageusement et selon l'invention, le bord d'attaque de l'(des) aile(s) s'étend en regard au-dessus de ladite partie avant de raccordement de la surface déflectrice à la portion avant de carrosserie du véhicule.

En outre, et selon l'invention, l'ensemble du dispositif déflecteur s'étend au moins sensiblement selon toute la largeur de chaque place avant, et notamment selon toute la largeur du véhicule.

En outre, le bord de fuite de l'aile la plus en aval dans le courant d'air est au moins sensiblement en regard vers l'avant du bord de fuite de la surface déflectrice. Le bord de fuite de l'aile située la plus en aval est incliné vers l'avant par rapport à la direction verticale d'un angle compris entre 0 et 45°, notamment de l'ordre de 30°. Plus particulièrement et selon l'invention, ce bord de fuite est au moins sensiblement vertical, c'est-à-dire au moins sensiblement perpendiculaire audit courant d'air relatif incident dû au déplacement du véhicule.

Chacune des ailes est disposée au voisinage de la surface déflectrice, c'est-à-dire à une distance telle qu'elle coopère du point de vue aérodynamique avec cette surface déflectrice ou avec une aile adjacente en vue de créer ledit flux d'air dévié, notamment en régime laminaire, vers le haut.

Selon l'invention, l'(les) aile(s) a(ont) un profil globalement concave à concavité orientée vers l'avant qui correspond au moins sensiblement à celui de la surface déflectrice. La courbure de l'(des) aile(s) est similaire à celle de la surface déflectrice ou est plus faible que celle de la surface déflectrice.

Selon l'invention, la section d'entrée définie entre le bord d'attaque de l'(des) aile(s) et la partie la plus proche de la surface déflectrice a une aire inférieure à celle de la section de sortie définie entre le bord de fuite de l'(des) aile(s) et la partie la plus proche de la surface déflectrice. De la sorte, l'espace compris entre la surface déflectrice et l'aile ou les ailes en regard est globalement divergent par rapport au sens du flux d'air qui le traverse.

Pour ce faire, selon l'invention, la distance comprise entre le bord d'attaque de l'(des) aile(s) et la surface déflectrice est inférieure à la distance comprise entre le bord de fuite de l'(des) aile(s) et la surface déflectrice. Plus précisément, la distance comprise entre le bord d'attaque de l'aile la plus en amont dans le courant d'air et la surface déflectrice est inférieure à la distance comprise entre le bord de fuite de l'aile la plus en aval dans le courant d'air et la surface déflectrice.

Plusieurs variantes de l'invention sont possibles. Dans une première variante, le véhicule comporte une aile unique devant la surface déflectrice. Dans ce cas, la courbure de l'extrados convexe de cette aile est au moins sensiblement la même ou inférieure ou égale à la courbure de la surface déflectrice.

Dans une deuxième variante, le véhicule comporte plusieurs ailes semblables s'étendant au moins sensiblement parallèlement les unes aux autres, juxtaposées les unes à côté des autres de façon à former une grille d'ailes traversée par le courant d'air relatif. Cette grille d'ailes peut s'étendre au moins sensiblement horizontalement et/ou au moins sensiblement verticalement à l'avant de la surface déflectrice.

Dans un mode de réalisation avantageux et selon l'invention, le véhicule comporte deux ailes disposées l'une par rapport à l'autre à la manière d'une aile fendue dans sa longueur, à savoir une aile avant inférieure disposée le plus vers l'avant et vers le bas, et une aile arrière supérieure disposée la plus vers l'arrière et vers le haut.

La forme du profil de chacune des ailes ainsi que leurs angles de calage, d'incidence et de sortie par rapport au courant d'air sont déterminés pour obtenir le flux d'air dévié vers le haut s'écoulant en régime laminaire sus-mentionné.

On a effet constaté que malgré la faible hauteur disponible entre la carrosserie et la limite inférieure du champ de vision normalisé, il est possible avec une surface déflectrice et une ou plusieurs ailes selon l'invention, d'obtenir dès les plus faibles vitesses (environ 10 km/h) et jusqu'aux vitesses les plus importantes (300 km/h ou plus), une protection extrêmement efficace du pilote et/ou du passager de ladite place avant grâce à l'écran d'air ainsi formé. Ainsi, l'occupant de ladite place avant a son champ de vision entièrement dégagé dans toutes les directions horizontales, et notamment vers l'avant du véhicule, mais se trouve, même à haute vitesse, dans une zone parfaitement calme sans courant d'air ni turbulences. En particulier, l'occupant de ladite place avant peut rester parfaitement les yeux ouverts, sans être gêné en aucune manière. En outre, il a été constaté qu'une conversation à voix normale peut être tenue dans le véhicule, y compris à haute vitesse, malgré l'absence d'habitacle fermé.

Par contre, il est à noter que ces résultats ne sont plus obtenus si l'on supprime toute aile en regard de la surface déflectrice et/ou la surface déflectrice elle-même. Dans ce cas en effet, le courant d'air présente en pratique une direction horizontale vers l'arrière dès le bord de fuite de la surface déflectrice ou de l'aile, avec de fortes turbulences. Il est a noter également que cette surface déflectrice est concave, contrairement à la plupart des déflecteurs ou carénages.

Selon l'invention, la surface déflectrice peut avoir un rayon de courbure compris entre 5 et 15 cm, notamment de l'ordre de 9 cm, et le dispositif déflecteur formé par la surface déflectrice et l'(les) aile(s) s'étend sur une hauteur qui peut être comprise entre 10 cm et 20 cm par rapport à la carrosserie.

L'invention concerne également un véhicule comprenant en combinaison tout ou partie des caractéristiques mentionnées ci-dessus ou ci-après.

D'autres caractéristiques et avantages de l'invention apparaîtront à la lecture de la description suivante qui se réfère aux figures annexées dans lesquelles :
- la figure 1 est une vue schématique en élévation partiellement arrachée d'un véhicule selon l'invention,
- la figure 2 est une vue agrandie en coupe par un plan vertical longitudinal du dispositif déflecteur du véhicule de la figure 1,
- la figure 3 est une vue de devant d'un véhicule selon l'invention,
- la figure 4 est une vue de dessus d'un véhicule selon l'invention,
- les figures 5, 6, 7 sont des vues schématiques en coupe similaires à la figure 2 représentant respectivement des variantes de l'invention.

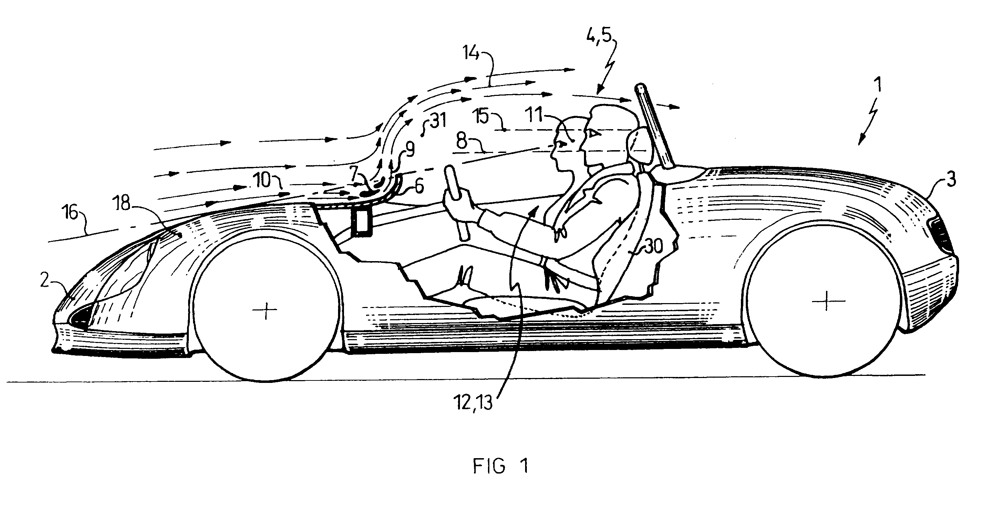

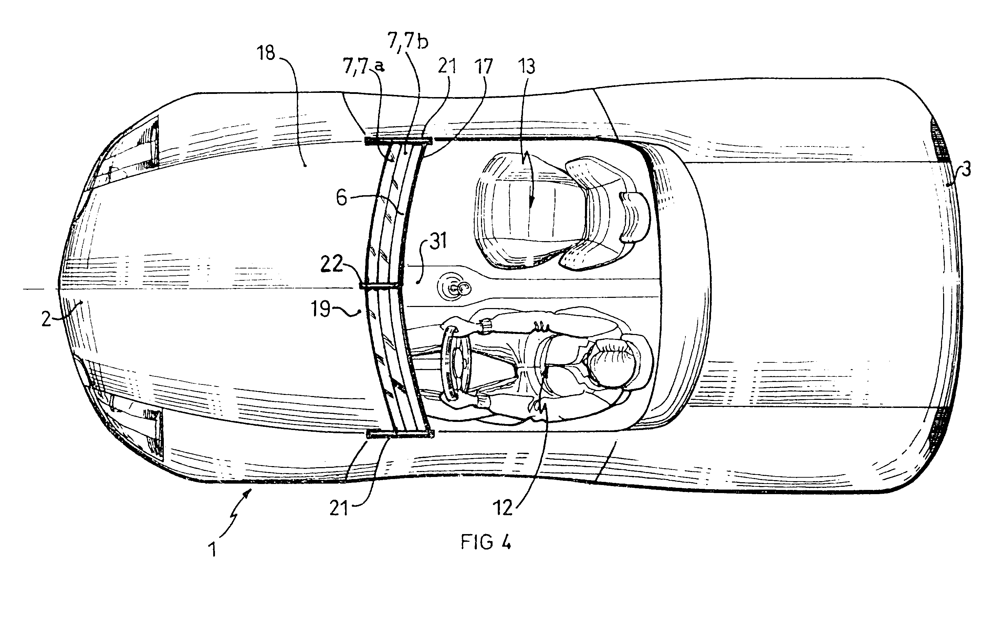

Les figures 1, 3 et 4 représentent un exemple de véhicule selon l'invention constitué d'une voiture automobile.

Dans tout le texte de la présente demande, le véhicule 1 est supposé se déplacer horizontalement et le courant d'air 10 relatif créé par le déplacement du véhicule est supposé être horizontal. Le véhicule 1 présente une extrémité avant 2 et une extrémité arrière 3 définies par rapport à sa direction de déplacement. Dans tout le texte de la présente demande, les termes "avant" et "arrière" sont utilisés en référence à la direction de déplacement du véhicule 1. Egalement, les termes "amont" et "aval" sont utilisés de façon traditionnelle en référence au sens de déplacement du courant d'air relatif 10.

La direction longitudinale du véhicule 1 est la direction horizontale parallèle au déplacement horizontal du véhicule. La direction transversale est la direction horizontale perpendiculaire à la direction longitudinale du déplacement du véhicule.

Dans l'exemple représenté, le véhicule 1 comprend deux places avant 4, 5, à savoir une place avant de pilotage 4 apte à recevoir un pilote ou un conducteur, et une place avant de passager 5. En tout état de cause, le véhicule 1 selon l'invention comprend au moins une place avant, c'est-à-dire au moins une place de pilotage et/ou de passager qui est située le plus vers l'avant du véhicule 1 et n'est donc pas précédée par une autre place de pilotage et/ou de passager située à la même hauteur.

Les places avant 4, 5 du véhicule 1 sont définies par des moyens 30 d'accueil de chaque occupant qui, dans l'exemple représenté sont des sièges 30. Ces moyens 30 d'accueil peuvent être constitués d'un habitacle, d'une selle, d'un cockpit, ..., selon la nature du véhicule 1.

Les moyens 30 d'accueil s'inscrivent dans un volume délimité par la carrosserie et/ou le châssis du véhicule.

A chaque place avant 4, 5 d'un véhicule, la réglementation définit, une fois lesdits moyens 30 d'accueil déterminés, une zone 11 normalisée d'emplacement des yeux de l'occupant de ladite place avant 4, 5, c'est-à-dire une zone d'espace dans laquelle les yeux d'un occupant de taille normalisée peuvent se trouver. Cette zone 11 s'inscrit en particulier entre un plan horizontal inférieur 8 et un plan horizontal supérieur 15. La réglementation définit aussi le champ de vision normalisé de l'occupant et sa limite inférieure 16 qui est le plan passant par ladite zone 11 et qui est tangent à la portion avant 18 de carrosserie à l'avant du véhicule 1.

Dans l'exemple représenté, la limite inférieure 16 est un plan incliné vers l'avant et vers le bas d'un angle θ inférieur à 10°, généralement compris entre 5° et 10°.

Les places avant 4, 5 peuvent être définies par d'autres moyens que des sièges 30, par exemple par un simple habitacle délimité par une carrosserie en forme de caisse à parois au moins sensiblement verticales (la place avant pouvant être une place collective où plusieurs passagers se tiennent debout). Tel est peut être par exemple le cas avec un bateau à moteur de promenade touristique ou avec un wagon ....

Le véhicule 1 selon l'invention comprend un dispositif déflecteur 6, 7 disposé à l'avant d'au moins une place avant 4, 5, et de préférence avantageusement à l'avant de chacune des places avant 4, 5.

Le dispositif déflecteur 6, 7 est formé d'une surface déflectrice 6 fixée au châssis et/ou à la carrosserie du véhicule 1. Cette surface 6 s'étend au moins sensiblement horizontalement selon la direction transversale du véhicule et vers le haut dans le courant d'air relatif créé par le déplacement du véhicule. La surface déflectrice 6 a un bord de fuite orienté vers le haut et est profilée. Sa section droite courante par tout plan vertical longitudinal est courbe, concave et sa concavité est orientée globalement vers l'avant. De la sorte, la surface déflectrice 6 défléchit tout le courant d'air relatif horizontal qu'elle reçoit vers le haut, et plus particulièrement à 90° dans la direction verticale. La surface déflectrice 6 forme donc une paroi de séparation entre le courant d'air qu'elle reçoit de l'avant, et une zone d'air calme exempte de turbulences située à l'arrière de la surface déflectrice.

Le dispositif déflecteur 6, 7 comporte également une (ou plusieurs) aile(s) 7 fixée(s) au véhicule 1. Chaque aile 7 s'étend dans le courant d'air relatif incident, immédiatement en amont, en regard et au voisinage de la surface déflectrice 6. La surface déflectrice 6 et l'ensemble des ailes 7 forment un dispositif déflecteur 6, 7 dont les caractéristiques aérodynamiques dépendent du choix de la forme et des dimensions de la surface déflectrice 6 et du nombre, de la forme, des dimensions, et de la position de chacune des ailes 7.

Selon l'invention, la surface déflectrice 6 et l'(les) aile(s) 7 s'étendent au-dessous du plan horizontal 8 inférieur de la zone 11 normalisée d'emplacement des yeux. Et le dispositif déflecteur 6, 7 est adapté pour former, avec le courant d'air relatif 10 horizontal incident dans le dispositif déflecteur 6, 7 et créé par le déplacement du véhicule, un flux d'air dévié 9 qui s'écoule vers le haut en faisant office d'écran d'air devant l'espace d'occupation 12, 13 de ladite place avant 4, 5, jusqu'à une hauteur suffisante pour que l'air soit au repos et exempt de turbulences dans ladite zone 11 normalisée d'emplacement des yeux. Le flux d'air dévié 9 sortant du dispositif déflecteur 6, 7 protège donc un espace 31 qui s'étend immédiatement à l'arrière et au-dessus de la surface déflectrice 6 sur une certaine longueur horizontale. Le flux d'air dévié 9 rencontre, à la sortie du dispositif déflecteur 6, 7, le courant d'air horizontal relatif 10 créé par le déplacement du véhicule 1. L'ensemble forme un courant d'air résultant 14 qui passe au-dessus de ladite zone 11 et s'étend jusqu'à l'arrière du véhicule 1 (figure 1). L'amplitude selon laquelle le courant d'air relatif horizontal 10 est détourné verticalement et vers le haut par le flux d'air dévié 9 ainsi que l'efficacité de la protection conférée dans la zone 11 dépend de l'énergie véhiculée par ce flux d'air dévié 9 à la sortie du dispositif déflecteur 6, 7.

Selon l'invention, le dispositif déflecteur 6, 7 est adapté pour créer un flux d'air dévié 9 qui s'écoule vers le haut en régime laminaire avec une énergie suffisante pour dévier le courant d'air relatif 10 dû au déplacement du véhicule au-dessus de ladite zone 11 normalisée d'emplacement des yeux et plus particulièrement au-dessus du plan horizontal supérieur 15 de cette zone 11 normalisée d'emplacement des yeux. En outre, l'énergie véhiculée par le flux d'air 9 dévié est suffisante pour que le courant résultant 14 passe au-dessus de ladite zone 11 sur une distance longitudinale au moins égale à la dimension longitudinale de ladite place avant 4, 5 et plus particulièrement de l'habitacle complet du véhicule. En effet, au bout d'une certaine distance longitudinale, le courant d'air résultant 14 redevient turbulent et occupe toute la hauteur au-dessus du véhicule 1.

Ainsi, le dispositif déflecteur 6, 7 selon l'invention a pour fonction de détourner, vers le haut et sur une certaine distance vers l'arrière, le courant d'air relatif 10 horizontal incident créé par le déplacement du véhicule de façon à former un espace 31 protégé qui reste parfaitement calme et exempt de turbulences, c'est-à-dire dans lequel la vitesse de l'air est nulle ou négligeable. Cet espace 31 englobe ladite zone 11 normalisée d'emplacement des yeux.

En outre, et selon l'invention, l'ensemble du dispositif déflecteur 6, 7 formé par la surface déflectrice 6 et l'(les) aile(s) 7 s'étend intégralement en-dessous de la limite inférieure 16 du champ de vision normalisé correspondant à ladite place avant 4, 5. Le dispositif 6, 7 déflecteur est adapté pour que le flux d'air dévié 9 s'écoule vers le haut au-dessus du plan horizontal supérieur 15 de ladite zone 11 normalisée d'emplacement des yeux. Le véhicule 1 selon l'invention se caractérise alors par le fait qu'il est exempt de pare-brise avant. Malgré cela, l'(les) occupant(s) du véhicule 1 sont parfaitement protégés, et notamment au moins aussi bien protégés que dans un véhicule de type cabriolet doté d'un pare-brise sans toit.

Il a en effet été constaté de façon inattendue, que malgré le peu de place disponible entre la limite inférieure 16 du champ de vision normalisé et la carrosserie du véhicule, il est possible d'insérer dans cet espace un dispositif déflecteur 6, 7 suffisamment efficace pour obtenir une protection appropriée, et ce à condition d'utiliser une surface déflectrice 6 concave et au moins une aile 7 comme mentionné ci-dessus.

L'invention concerne plus particulièrement et avantageusement un véhicule du type comprenant une portion avant 18 de carrosserie qui s'étend à l'avant de la(des) place(s) avant 4, 5 en formant une surface continue au moins sensiblement horizontale entre la(les) place(s) avant 4, 5 et l'extrémité avant 2 du véhicule 1.

Selon l'invention, la surface déflectrice 6 s'étend alors en saillie vers le haut par rapport à cette portion avant 18 de carrosserie, dans le courant d'air relatif 10 au moins sensiblement horizontal qui est créé le long de cette portion avant 18 de carrosserie. La portion avant 18 de carrosserie est par exemple constituée d'un capot avant de véhicule s'étendant entre l'extrémité avant 2 et la limite avant de l'espace d'occupation 12, 13 de ladite place avant 4, 5 définie par la carrosserie et/ou le châssis.

Plus particulièrement, la surface déflectrice 6 est fixée immédiatement à l'avant de ladite place avant 4, 5, dans le prolongement vers l'arrière de la partie arrière 19, qui s'étend au moins sensiblement horizontalement, de cette portion avant 18 de carrosserie. Autrement dit, la surface déflectrice 6 s'étend globalement à l'emplacement qui est réservé au pare-brise dans un véhicule traditionnel de l'art antérieur.

La surface déflectrice 6 comporte une partie avant 20 de raccordement qui s'étend au moins sensiblement horizontalement et qui est reliée continûment, tangentiellement et de façon étanche dans le prolongement vers l'arrière de la partie arrière 19 de ladite portion avant 18 de carrosserie. L'étanchéité entre la surface déflectrice 6 et la partie arrière 19 de carrosserie est parfaite sur toute la dimension de cette surface 6 selon la direction transversale du véhicule 1. Néanmoins, dans le cadre de la présente invention, cette notion d'étanchéité parfaite englobe la possibilité de prévoir éventuellement, en variante non représentée et de façon traditionnelle, des prises d'air ou évents de faibles dimensions, généralement dotés de moyens de contrôle manuel, pour l'aération des passagers.

Ainsi, la surface déflectrice 6 est associée solidaire de façon étanche à un élément transversal 19 inférieur de la carrosserie (qui est formé de la partie arrière de la portion avant 18 de carrosserie dans les exemples représentés), de façon que le courant d'air relatif s'échappe entièrement ou quasiment entièrement au-dessus du bord de fuite 17, aucun courant d'air ne s'écoulant sous la surface déflectrice 6, notamment entre la carrosserie et cette surface 6.

De la sorte, aucun courant d'air ne pénètre de façon intempestive dans l'espace d'occupation 12, 13 des places avant 4, 5 lorsque le véhicule se déplace.

La surface déflectrice 6 est fixée rigidement et normalement inamovible par rapport au véhicule 1, par exemple par boulonnage et/ou rivetage ou autre, à la carrosserie et/ou au châssis du véhicule 1. Le véhicule 1 selon l'invention peut comporter néanmoins des moyens de réglage de l'orientation et/ou de la position de la surface déflectrice 6. Par exemple, cette surface déflectrice 6 peut être montée coulissante sur rail horizontalement et/ou verticalement ou sur ou entre des platines pivotantes qui permettent ces réglages tout en assurant un blocage en position.

Dans l'exemple représenté, la surface déflectrice 6 est formée d'un prolongement continu du capot avant 18 de la carrosserie. Elle est donc d'un seul tenant avec la portion avant 18 de la carrosserie.

De même, chacune des ailes 7 est fixée rigidement et normalement inamovible par rapport à la carrosserie et/ou au châssis du véhicule 1. Là encore, des moyens de réglage de la position et/ou de l'orientation de chacune des ailes 7 peuvent être prévus. Par exemple, chaque aile 7 a son extrémité fixée solidaire d'une platine qui peut être montée coulissante horizontalement et/ou verticalement et/ou pivotante par rapport à un support solidaire de la carrosserie et/ou du châssis.

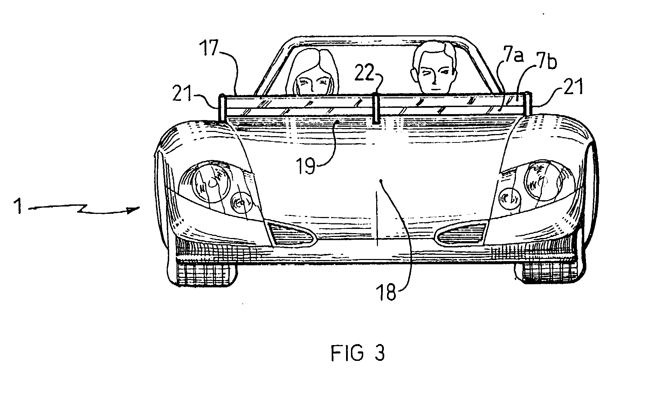

Dans l'exemple représenté, chaque aile 7 porte une platine 21 fixée à chacune de ses extrémités latérales, et cette platine 21 est fixée à la carrosserie du véhicule 1. Comme on le voit figure 3, le dispositif déflecteur 6, 7 formé par la surface déflectrice 6 et chacune des ailes 7 s'étend selon toute la largeur des places avant 4, 5 et donc selon toute la largeur du véhicule 1. Plus précisément, le dispositif déflecteur 6, 7 s'étend selon toute la largeur de la partie arrière 19 de ladite portion avant 18 de carrosserie qui est située à l'avant des places avant 4, 5.

Chaque aile 7 est formée selon sa longueur en deux parties, chaque partie s'étendant devant une des deux places avant 4, 5. Les deux parties de chaque aile 7 sont réunies au centre du véhicule par une platine 22 centrale fixée à la carrosserie.

Le dispositif déflecteur 6, 7 s'étend intégralement sous la limite inférieure 16 du champ de vision correspondant aux places avant 4, 5, c'est-à-dire ne comporte aucune partie en saillie au-dessus de cette limite inférieure 16. En pratique, la limite inférieure 16 du champ de vision est un plan qui passe par l'emplacement normalisé le plus bas des yeux d'un occupant de taille normalisée correspondant au véhicule 1, et qui est tangent vers l'avant à la portion 18 avant de carrosserie. Ce plan est incliné vers l'avant et vers le bas. Ainsi, le bord de fuite 17 de la surface déflectrice 6 peut être placé à une hauteur légèrement supérieure du bord de fuite 23 le plus aval de l'(des) aile(s) 7, ces deux bords de fuite 17, 23 étant tous deux sous la limite 16.

Selon l'invention, le bord de fuite 17 de la surface déflectrice n'est pas incliné vers l'avant ou vers l'arrière d'un angle supérieur à 45° par rapport à la verticale. Plus particulièrement, le bord de fuite 17 est orienté vers le haut en formant un angle avec la direction verticale (c'est-à-dire avec un plan vertical transversal au véhicule) qui est inférieur à 45° -notamment inférieur à 10°.

Selon l'invention, le bord de fuite 17 de la surface déflectrice 6 est avantageusement orienté au moins sensiblement verticalement, c'est-à-dire perpendiculairement au courant d'air relatif incident 10 créé par le déplacement du véhicule, à 90° vers le haut par rapport à la direction du déplacement relatif du courant d'air 10.

La surface déflectrice 6 présente un profil dont la courbure est la plus régulière possible et la plus faible possible entre sa partie avant 20 qui s'étend au moins sensiblement horizontalement et son bord de fuite 17 qui s'étend au moins sensiblement verticalement. En particulier et selon l'invention, le profil de la surface déflectrice 6 est au moins sensiblement circulaire. Le rayon de courbure de ce profil circulaire est déterminé par le fait que le bord de fuite 17 s'étend verticalement et par la hauteur disponible pour loger la surface déflectrice 6 entre la limite inférieure 16 du champ de vision et la carrosserie.

Le rayon de courbure de la surface déflectrice 6 d'un véhicule selon l'invention peut être compris entre 5 et 15 cm, et notamment être de l'ordre de 9 cm.

L'(les) aile(s) 7 définissent un bord d'attaque 24, qui est le bord d'attaque 24 de l'aile 7 disposée la plus en amont. Selon l'invention, ce bord d'attaque 24 s'étend en regard et au-dessus de la partie avant 20 de raccordement de la surface déflectrice 6 à la portion avant 18 de carrosserie du véhicule. De même, l'(les) aile(s) 7 définissent un bord de fuite 23 qui est le bord de fuite 23 de l'aile 7 la plus en aval par rapport au courant d'air. Ce bord de fuite 23 est en regard vers l'avant et légèrement plus bas que le bord de fuite 17 de la surface déflectrice 6.

Selon l'invention, la section efficace d'entrée du courant d'air 10, qui est définie entre le bord d'attaque 24 de l'(des) aile(s) 7 et la partie 20 la plus proche de la surface déflectrice 6, a une aire inférieure à l'aire de la section efficace de sortie du flux dévié 9, qui est définie entre le bord de fuite 23 de l'(des) aile(s) 7 et la partie 17 la plus proche (bord de fuite) de la surface déflectrice 6. Ainsi, l'espace compris entre la section d'entrée et la section de sortie est globalement divergent.

Chaque aile 7 a un profil globalement concave à concavité orientée vers l'avant qui correspond au moins sensiblement à celui de la surface déflectrice 6. Néanmoins, chaque aile 7 présente avantageusement et de préférence une courbure moyenne qui est plus faible que celle de la surface déflectrice 6.

Avantageusement et selon l'invention, chacune des ailes 7 a un profil courbe d'aube à intrados concave et extrados convexe, qui est déterminé à la façon du profil d'une aube fixe déflectrice. Ce profil est déterminé pour que le flux dévié 9 soit laminaire et ait une énergie maximum dans le sens vertical à la sortie du dispositif déflecteur 6, 7.

Plus particulièrement, la distance comprise entre le bord d'attaque 24 de l'aile 7 la plus en amont et la surface déflectrice 6 est inférieure à la distance comprise entre le bord de fuite 23 de l'aile 7 la plus en aval et la surface déflectrice 6. En outre, l'aile 7 du dispositif 6, 7 qui est la plus proche de la surface déflectrice 6, s'étend à une distance de cette surface déflectrice 6 qui est comprise entre 1 cm et 20 cm, et plus particulièrement de l'ordre de 2 à 10 cm. La distance séparant l'aile 7 la plus proche de la surface déflectrice 6 et cette surface déflectrice 6 est au moins sensiblement la même tout le long de la surface déflectrice 6 selon la largeur du véhicule. Dans le cas où le dispositif comporte plusieurs ailes 7, il en va de même de la distance qui sépare les ailes 7 deux à deux l'une de l'autre.

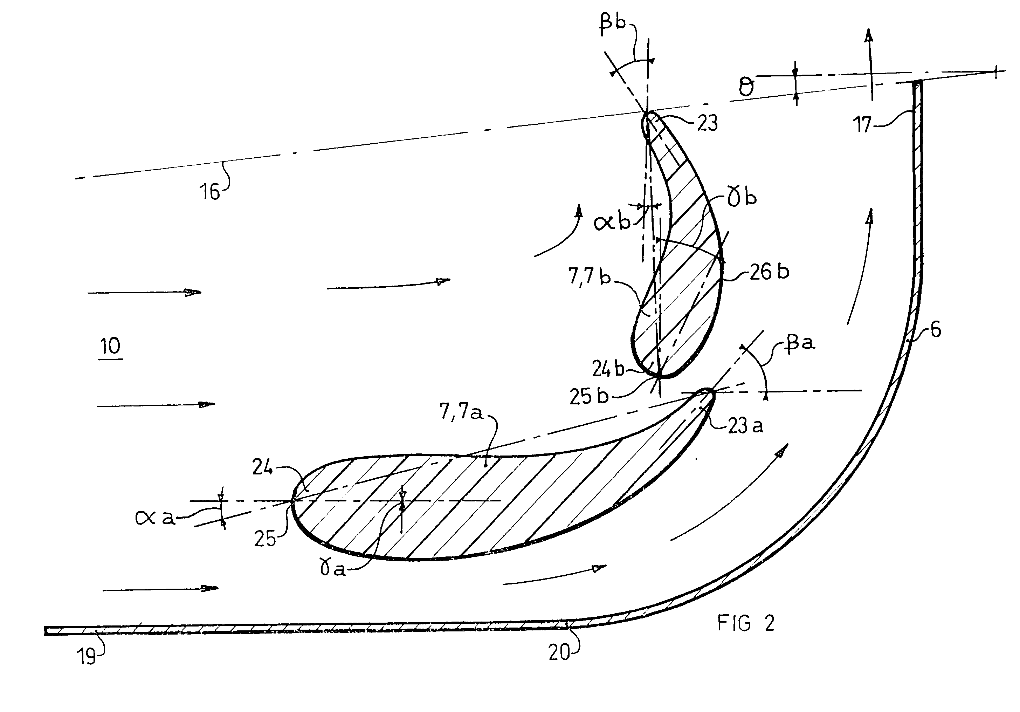

Le bord d'attaque 24 de l'aile 7 la plus en amont définit, de façon traditionnelle, une ligne neutre 25 médiane par rapport au courant d'air 10 incident (figure 2). Selon l'invention, la distance comprise entre la ligne neutre 25 du bord d'attaque 23 de l'aile 7 la plus en amont et la surface déflectrice 6 est comprise entre 1 cm et 5 cm, notamment de l'ordre de 3 cm.

En outre, la distance comprise entre le bord de fuite 23 de l'aile 7 la plus en aval et la surface déflectrice 6 est avantageusement comprise entre 3 cm et 10 cm, et plus particulièrement de l'ordre de 6 cm.

La surface déflectrice 6 et chacune des ailes 7 s'étendent globalement parallèlement les unes aux autres selon la direction transversale du véhicule. La forme générale prise par la surface déflectrice 6 et chacune des ailes 7 peut être strictement droite et correspondre à la direction transversale du véhicule 1, ou, en variante, être plus ou moins cintrée dans un plan horizontal et/ou dans un plan vertical transversal, notamment pour des questions d'esthétique générale du véhicule. Par exemple, les extrémités latérales peuvent être plus en arrière, le dispositif déflecteur 6, 7 présentant une convexité plus ou moins importante orientée vers l'avant. Au contraire, le dispositif déflecteur 6, 7 peut présenter une certaine concavité vers l'avant. Egalement, les extrémités latérales du dispositif déflecteur 6, 7 peuvent être plus basses que la portion médiane axiale, ce dispositif présentant une convexité orientée vers le haut.

Du point de vue aérodynamique et selon l'invention, il est cependant préférable que le dispositif déflecteur 6, 7, soit strictement perpendiculaire au courant d'air relatif 10 incident, dont la direction dépend de la forme de la portion avant 18 de carrosserie.

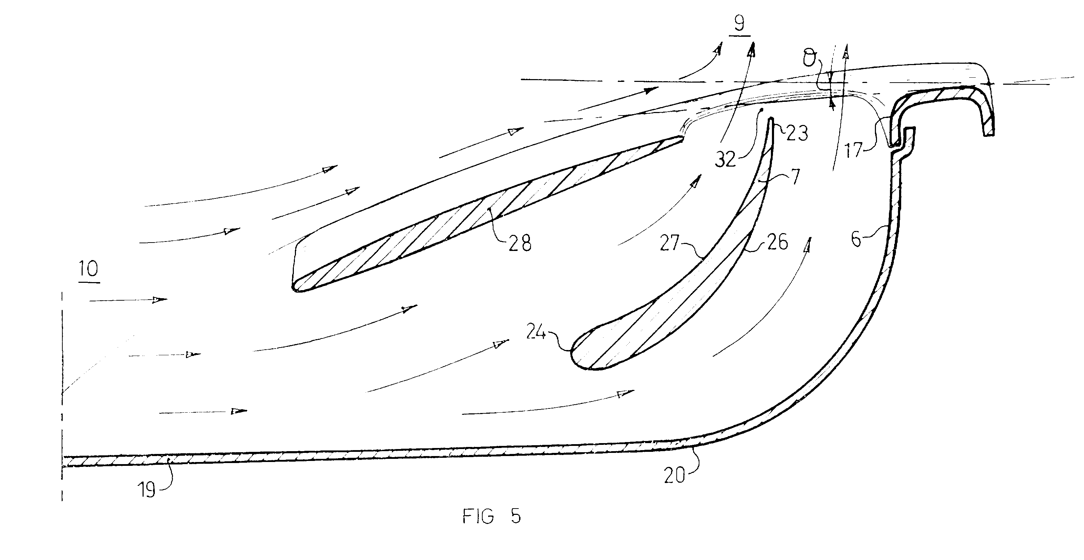

Dans le mode de réalisation représenté sur la figure 5, le dispositif déflecteur 6, 7 comporte une aile unique 7 disposée devant la surface déflectrice 6. Cette aile 7 présente un extrados convexe 26 en regard de la surface déflectrice 6. La courbure de cet extrados convexe 26 de l'aile 7 peut être soit au moins sensiblement la même, soit inférieure ou écale à celle de la surface déflectrice 6. L'intrados concave 27 de l'aile 7 est calculé pour obtenir en sortie du bord de fuite 23, un flux d'air dévié 9 laminaire vers le haut.

Dans la variante de la figure 5, on a représenté également un cache 28 supérieur avant s'étendant vers l'avant de l'aile 7 au-dessus de la portion avant 18 de carrosserie pour masquer, autant que possible, l'aile 7 et la surface déflectrice 6. Ce cache 28 a une forme et des dimensions qui sont déterminées pour être le plus neutre possible par rapport au courant d'air relatif afin de ne pas perturber le fonctionnement aérodynamique du dispositif déflecteur 6, 7. Le cache 28 a donc essentiellement une fonction esthétique. Il est fixé sur les côtés de la carrosserie et éventuellement par une nervure s'étendant selon l'axe longitudinal médian du véhicule. Dans l'exemple représenté, le cache 28 vient coiffer la surface déflectrice 6 et l'aile 7 et s'étend vers l'avant légèrement incliné vers le bas. Il est profilé à la manière d'une aile plate biconvexe. En regard du bord de fuite 23 de l'aile 7, le cache 28 comporte une bouche de sortie 32 du flux d'air dévié 9. Dans le cas d'une aile 7 en deux parties longitudinales, le cache 28 comporte deux bouches 32 de sorties, une en regard et à l'avant de chaque place avant 4, 5. Le bord arrière transversal libre de chaque bouche 32 de sortie définit le bord de fuite 17 de la surface déflectrice 6.

La figure 2 représente une variante préférentielle de l'invention dans laquelle le dispositif déflecteur 6, 7 comporte deux ailes 7a, 7b disposées l'une par rapport à l'autre à la manière d'une aile fendue. Ainsi, le dispositif comporte une aile avant inférieure 7a disposée la plus vers l'avant et vers le bas, c'est-à-dire en amont par rapport au courant d'air relatif, et une aile arrière supérieure 7b disposée la plus vers l'arrière et vers le haut, c'est-à-dire la plus vers l'aval par rapport au courant d'air relatif.

Dans toute la présente demande, on entend par "angle de calage" d'une aile par rapport à une direction fixe du véhicule, l'angle défini entre cette direction et la direction passant par la ligne neutre du bord d'attaque et par la ligne neutre du bord de fuite de cette aile. Selon l'invention, l'aile avant inférieure 7a a un profil dont l'angle de calage αa par rapport à la direction horizontale longitudinale est inférieure à 45°, notamment de l'ordre de 15°. En outre, le bord d'attaque 24 de l'aile 7a située la plus en amont est à incidence γa faible, inférieure à 10°, notamment nulle par rapport au courant relatif 10. Autrement dit, l'angle d'incidence γa formé par la ligne neutre 25 du bord d'attaque 24 de l'aile avant inférieure 7a avec la direction horizontale longitudinale est faible, inférieur à 10°, de préférence inférieur à 5°. Dans l'exemple représenté, l'angle γa est nul.

L'aile arrière supérieure 7b a un profil orienté au moins sensiblement verticalement. L'aile arrière supérieure 7b a un profil dont l'angle de calage αb par rapport à la direction verticale est faible, c'est-à-dire inférieur à 5°. Dans l'exemple représenté et selon l'invention, cet angle de calage αb peut être négatif, le bord de fuite 23 étant placé plus en avant que la ligne neutre 25b du bord d'attaque 24b de cette aile 7b.

En outre, le bord de fuite 23 de l'aile située la plus en aval 7b est incliné vers l'avant par rapport à la direction verticale d'un angle βb compris entre 0 et 45°, notamment de l'ordre de 30°.

Le bord de fuite 23a de l'aile avant inférieure 7a forme un angle βa compris entre 20° et 60°, notamment de l'ordre de 45°, par rapport à la direction horizontale longitudinale. Ce bord de fuite 23a de l'aile avant inférieure 7a s'étend immédiatement sous le bord d'attaque 24b de l'aile arrière supérieure 7b. Et la ligne neutre 25b du bord d'attaque 24b de l'aile arrière supérieure 7b forme un angle d'incidence γb compris entre 10° et 45°, notamment de l'ordre de 30°, par rapport à la direction verticale.

Egalement et selon l'invention, le bord de cuita 23a de l'aile avant inférieure 7a s'étend au moins sensiblement à la verticale de la direction verticale tangente à l'extrados 26b de l'aile arrière supérieure 7b.

La fente de l'aileron fendu formé par les deux ailes 7a, 7b a une épaisseur comprise entre 3 mm et 20 mm, notamment entre 5 mm et 10 mm. Ainsi, le bord de fuite 23a de l'aile avant inférieure 7a est distant du bord d'attaque 24b de l'aile arrière supérieure 7b d'une distance comprise entre 3 mm et 20 mm, notamment entre 5 mm et 10 mm.

Le dispositif déflecteur 6, 7a, 7b ainsi constitué, représenté à l'échelle 1 sur la figure 2 a été placé sur une voiture automobile sans pare-brise telle que celle représentée sur les figures 1, 3 et 4. Il a été constaté avec surprise, que ce dispositif déflecteur permet de protéger les occupants des places avant 4, 5 du véhicule 1 a toutes les vitesses d'utilisation du véhicule, et notamment entre 10 km/h et 250 km/h. Malgré l'absence de pare brise, les occupants peuvent ouvrir les yeux sans recevoir aucun courant d'air et converser comme dans un habitacle de berline. Ces résultats ont aussi également été obtenus avec le dispositif déflecteur 6, 7 de la figure 5.

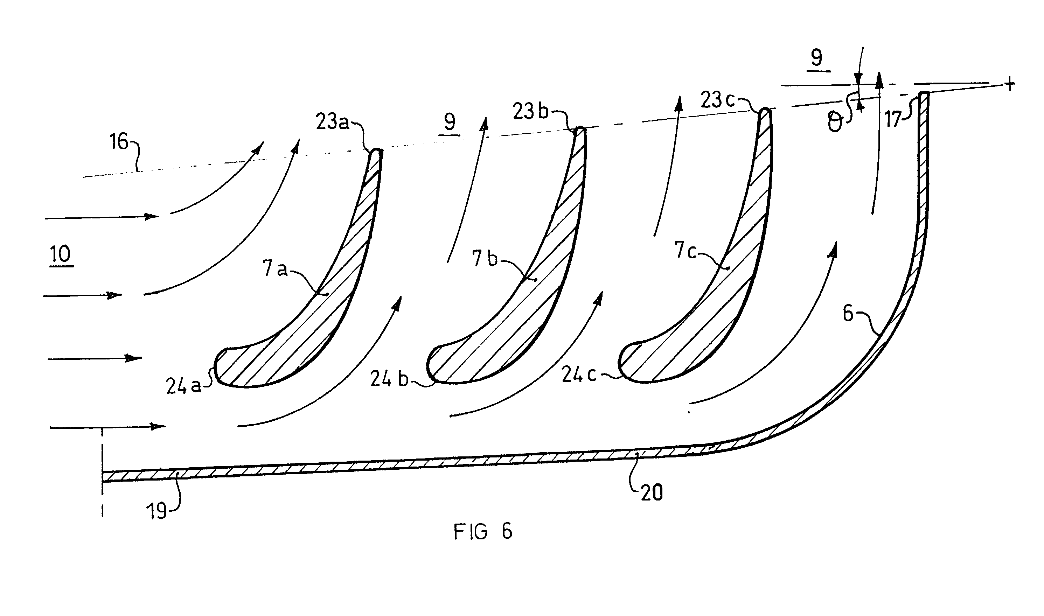

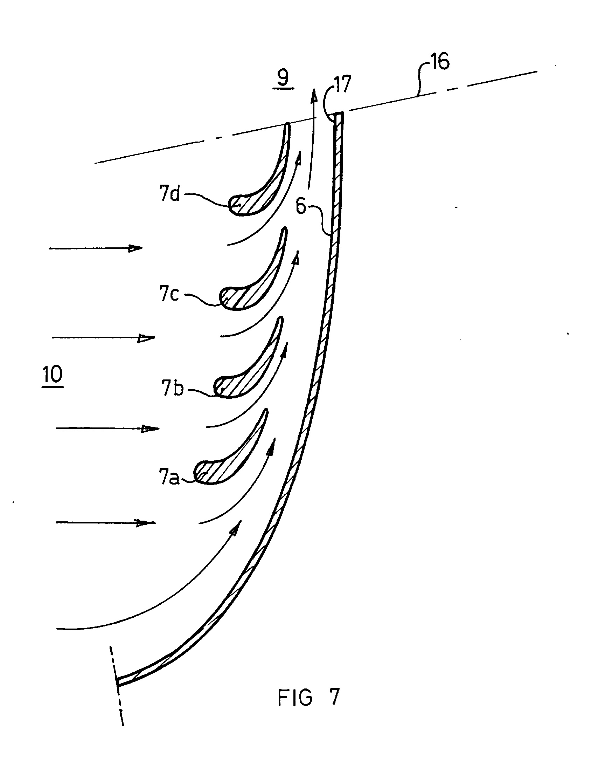

Les figures 6 et 7 représentent d'autres variantes de l'invention dans lesquelles le véhicule comporte plusieurs ailes semblables 7 s'étendant au moins sensiblement parallèlement les unes aux autres, juxtaposées les unes à côté des autres et définissant entre elles une grille d'ailes traversée par le courant d'air relatif 10 incident qui est dévié vers le haut.

Dans la variante représentée sur la figure 6, trois ailes 7a, 7b, 7c sont juxtaposées les unes à côté des autres de l'avant vers l'arrière du véhicule. La distance qui sépare les bords d'attaque 24a, 24b, 24c de la portion avant 20 de la surface déflectrice 6 est plus importante pour l'aile 7a située la plus en avant et plus faible pour l'aile 7c située le plus en arrière. Cette distance décroît donc de l'avant vers l'arrière. Les bords de fuite 23a, 23b, 23c des différentes ailes 7a, 7b, 7c sont alignés selon la limite inférieure 16 du champ de vision normalisé correspondant aux places avant 4, 5.

Dans la variante de la figure 7, quatre ailes 7a, 7b, 7c, 7d sont juxtaposées selon une direction au moins sensiblement verticale qui correspond à la direction générale de la surface déflectrice 6. Cette variante est applicable lorsqu'une hauteur suffisante est disponible pour loger la surface déflectrice 6 à l'avant de la(des) place(s) avant du véhicule.

Il est bien évidemment possible de combiner les différentes variantes de l'invention, dans la mesure où l'espace disponible en hauteur et/ou en longueur entre la limite inférieure 16 du champ de vision et la carrosserie est suffisamment important.

L'invention est applicable non seulement à une voiture automobile monoplace, biplace ou comportant un nombre de places supérieur, mais également à d'autres catégories de véhicules tels que les motocyclettes, vélos-moteurs ou side-cars, les aéronefs (et plus particulièrement les aéronefs de type ultra-léger), les bateaux à moteur, ....

En outre, l'invention peut faire l'objet d'autres variantes que celles représentées sur les figures, et ce en fonction de chaque application et de chaque catégorie et dimensions de véhicule.

## Revendications

1. Véhicule destiné à se déplacer à vitesse subsonique, comprenant :
- des moyens définissant au moins une place avant pour au moins un occupant avec une zone (11) normalisée d'emplacement des yeux s'inscrivant entre un plan horizontal inférieur (8) et un plan horizontal supérieur (15), lesdits moyens étant ouverts à l'avant de ladite zone normalisée d'emplacement des yeux, le véhicule étant exempt de pare-brise avant,
- un dispositif déflecteur d'air comportant une surface déflectrice (6) fixée au véhicule à l'avant d'au moins une place avant (4, 5), et reliée à une portion avant (18) de carrosserie et/ou de châssis recevant un courant d'air relatif (10) lorsque le véhicule se déplace, cette surface déflectrice (6) s'étendant globalement au moins sensiblement selon la direction transversale du véhicule et dans le prolongement vers l'arrière de ladite portion avant (18) de carrosserie, et étant profilée avec une section droite courante verticale longitudinale concave à concavité orientée vers l'avant, et présentant un bord de fuite supérieur (17) orienté vers le haut de façon qu'au moins une fraction substantielle de courant d'air relatif (10) s'échappe au-dessus de ce bord de fuite (17) de la surface déflectrice (6),
- le dispositif déflecteur (6, 7) comprenant, en outre, au moins une aile (7) ayant un profil courbe globalement concave à concavité orientée vers l'avant, présentant un bord d'attaque (24) situé le plus en amont dans le courant d'air relatif (10) et un bord de fuite (23) situé le plus en aval dans le courant d'air relatif (10), et étant fixée au véhicule dans ledit courant d'air relatif (10), immédiatement en amont, à distance, en regard et au voisinage de la surface déflectrice (6),
- le bord d'attaque (24) de l'aile (7) la plus en amont s'étendant en regard et au-dessus de la surface déflectrice (6),
- le bord de fuite (23) de l'aile (7) la plus en aval dans le courant d'air étant au moins sensiblement en regard vers l'avant et à distance de la surface déflectrice (6),
- la surface déflectrice (6) et chaque aile (7) s'étendant au-dessous dudit plan horizontal inférieur (8) passant par ladite zone (11) normalisée d'emplacement des yeux,
- la distance comprise entre le bord d'attaque (24) de l'aile (7) la plus en amont et la surface déflectrice (6) étant inférieure à la distance comprise entre le bord de fuite (23) de l'aile (7) la plus en aval et la surface déflectrice (6), la surface déflectrice (6) et chaque aile (7) étant adaptées pour former un flux d'air qui est dévié et s'écoule vers le haut en régime laminaire devant ladite zone (11) normalisée d'emplacement des yeux et au-dessus dudit plan horizontal supérieur (15) avec une énergie suffisante pour dévier au moins la fraction substantielle de courant d'air relatif (10) au-dessus de ladite zone (11) normalisée d'emplacement des yeux, dans laquelle l'air est au moins sensiblement au repos.

2. Véhicule selon la revendication 1, caractérisé en ce que l'ensemble du dispositif déflecteur (6, 7) formé par la surface déflectrice (6) et l'(les) aile(s) (7) s'étend sous un plan (16), dit limite inférieure (16) du champ de vision normalisé, passant par ladite zone (11) normalisée d'emplacement des yeux et qui est tangent à ladite portion avant (18) de carrosserie.

3. Véhicule selon l'une des revendications 1 ou 2, caractérisé en ce que le bord de fuite (17) de la surface déflectrice (6) est orienté au moins sensiblement verticalement.

4. véhicule selon l'une des revendications 1 à 3, caractérisé en ce que le bord de fuite (17) de la surface déflectrice (6) forme un angle inférieur à 10° avec la direction verticale.

5. Véhicule selon l'une des revendications 1 à 4, caractérisé en ce que le bord de fuite (23) situé le plus en aval s'étend au moins sensiblement en regard vers l'avant du bord de fuite (17) de la surface déflectrice.

6. Véhicule selon l'une des revendications 1 à 5, caractérisé en ce que la surface déflectrice (6) est associée solidaire de façon étanche à la portion transversale avant (18) de carrosserie et/ou de châssis.

7. Véhicule selon l'une des revendications 1 à 6 dans lequel ladite portion avant (18) de carrosserie s'étend à l'avant de la(des) place(s) avant (4, 5) en formant une surface continue au moins sensiblement horizontale entre la(les) place(s) avant (4, 5) et l'extrémité avant (2) du véhicule (1), caractérisé en ce que la surface déflectrice (6) s'étend en saillie vers le haut par rapport à ladite portion avant (18) de carrosserie du véhicule dans le courant d'air relatif (10) créé le long de cette portion transversale avant (18) de carrosserie.

8. Véhicule selon la revendication 7, caractérisé en ce que la surface déflectrice (6) est fixée immédiatement à l'avant de ladite place avant (4, 5) dans le prolongement vers l'arrière d'une partie arrière (19) au moins sensiblement horizontale de la portion avant (18) de carrosserie, et en ce que la surface déflectrice (6) comporte une partie avant (20) de raccordement qui s'étend au moins sensiblement horizontalement et est reliée continûment tangentiellement dans le prolongement vers l'arrière de la partie arrière (19) de la portion avant (18) de carrosserie.

9. Véhicule selon l'une des revendications 1 à 8, caractérisé en ce que l'ensemble du dispositif déflecteur (6, 7) formé par la surface déflectrice (6) et l'(les) aile(s) (7) s'étend au moins sensiblement selon toute la largeur de chaque place avant (4, 5).

10. Véhicule selon l'une des revendications 1 à 8, caractérisé en ce que l'ensemble du dispositif déflecteur (6, 7) formé par la surface déflectrice (6) et l'(les) aile(s) (7) s'étend au moins sensiblement selon toute la largeur du véhicule (1).

11. Véhicule selon l'une des revendications 1 à 10, caractérisé en ce que la surface déflectrice (6) est profilée avec une section droite courante verticale longitudinale courbe, et en ce que l'(les) aile(s) (7) a(ont) un profil qui correspond au moins sensiblement à celui de la surface déflectrice (6).

12. Véhicule selon l'une des revendications 1 à 11, caractérisé en ce que chaque aile (7) présente un profil courbe d'aube fixe à intrados concave et à extrados convexe.

13. Véhicule selon l'une des revendications 1 à 12, caractérisé en ce que l'aile (7) la plus proche de la surface déflectrice (6) s'étend à une distance de la surface déflectrice (6) comprise entre 1 cm et 20 cm.

14. Véhicule selon l'une des revendications 1 à 13, caractérisé en ce que la distance séparant l'(les) aile(s) (7) et la surface déflectrice (6) est au moins sensiblement la même tout le long de la surface déflectrice (6), selon la direction transversale du véhicule.

15. Véhicule selon l'une des revendications 1 à 14, caractérisé en ce que la section d'entrée définie entre le bord d'attaque (24) de l'(des) aile(s) (7) et la partie la plus proche (20) de la surface déflectrice (6), a une aire inférieure à celle de la section de sortie définie entre le bord de fuite (23) de l'(des) aile(s) (7) et la partie (17) la plus proche de la surface déflectrice (6).

16. Véhicule selon l'une des revendications 1 à 15, caractérisé en ce que la distance comprise entre la ligne neutre (25) du bord d'attaque (24) de l'aile (7) la plus en amont et la surface déflectrice (6) est comprise entre 1 cm et 5 cm, notamment de l'ordre de 3 cm.

17. Véhicule selon l'une des revendications 1 à 16, caractérisé en ce que la distance comprise entre le bord de fuite (23) de l'aile (7) la plus en aval et la surface déflectrice est comprise entre 3 cm et 10 cm, notamment de l'ordre de 6 cm.

18. Véhicule selon l'une des revendications 1 à 17, caractérisé en ce qu'il comporte une aile unique (7) comprenant un intrados concave (27) orienté vers l'avant et un extrados convexe (26) orienté devant et en regard de la surface déflectrice (6).

19. Véhicule selon les revendications 11 et 18, caractérisé en ce que la courbure de l'extrados convexe (26) de l'aile (7) est inférieure ou égale à celle de la surface déflectrice (6).

20. Véhicule selon la revendication 19, caractérisé en ce que la courbure de l'extrados convexe (26) de l'aile (7) est au moins sensiblement la même que celle de la surface déflectrice (6).

21. Véhicule selon l'une des revendications 1 à 17, caractérisé en ce qu'il comporte plusieurs ailes (7a, 7b, 7c, 7d) semblables s'étendant au moins sensiblement parallèlement les unes aux autres, juxtaposées les unes à côté des autres et définissant entre elles une grille d'ailes traversée par le courant d'air relatif (10) qui est dévié vers le haut.

22. Véhicule selon l'une des revendications 1 à 17, caractérisé en ce qu'il comporte deux ailes (7a, 7b), à savoir une aile avant inférieure (7a) disposée la plus vers l'avant et vers le bas, qui a un profil dont l'angle de calage (αa) par rapport à la direction horizontale longitudinale est inférieur à 45°, notamment de l'ordre de 15°, et une aile arrière supérieure (7b) disposée la plus vers l'arrière et vers le haut, qui a un profil orienté au moins sensiblement verticalement.

23. Véhicule selon la revendication 22, caractérisé en ce que le bord de fuite (23) de l'aile (7b) située la plus en aval est incliné vers l'avant par rapport à la direction verticale d'un angle (βb) compris entre 0 et 45°, notamment de l'ordre de 30°.

24. Véhicule selon l'une des revendications 22 ou 23, caractérisé en ce que le bord d'attaque (24) de l'aile (7a) située la plus en amont est à incidence faible, inférieure à 10°, notamment nulle, par rapport au courant d'air relatif (10).

25. Véhicule selon l'une des revendications 22 à 24, caractérisé en ce que l'aile arrière supérieure (7b) a un profil dont l'angle de calage (αb) par rapport à la direction verticale est inférieur à 5°.

26. Véhicule selon l'une des revendications 22 à 25, caractérisé en ce que l'aile arrière supérieure (7b) a un profil dont l'angle de calage (αb) par rapport à la direction verticale est négatif, le bord de fuite (23) étant placé plus en avant que la ligne neutre du bord d'attaque (24b).

27. Véhicule selon l'une des revendications 22 à 26, caractérisé en ce que le bord de fuite (23a) de l'aile avant inférieure (7a) forme un angle (βa) compris entre 20° et 60° -notamment de l'ordre de 45°-par rapport à la direction horizontale longitudinale.

28. Véhicule selon l'une des revendications 22 à 27, caractérisé en ce que la ligne neutre (25b) du bord d'attaque (24b) de l'aile arrière supérieure (7b) forme un angle (γb) compris entre 10° et 45° -notamment de l'ordre de 30°- par rapport à la direction verticale.

29. Véhicule selon l'une des revendications 22 à 28, caractérisé en ce que le bord de fuite (23a) de l'aile avant inférieure (7a) s'étend immédiatement sous le bord d'attaque (24b) de l'aile arrière supérieure (7b).

30. Véhicule selon l'une des revendications 22 à 29, caractérisé en ce que le bord de fuite (23a) de l'aile avant inférieure (7a) s'étend au moins sensiblement à la verticale de la direction verticale tangente à l'extrados (26b) de l'aile arrière supérieure (7b).

31. Véhicule selon l'une des revendications 22 à 30, caractérisé en ce que le bord de fuite (23a) de l'aile avant inférieure (7a) est distant du bord d'attaque (24b) de l'aile arrière supérieure (7b) d'une distance comprise entre 3 mm et 20mm, notamment entre 5 mm et 10 mm.

32. Véhicule selon l'une des revendications 1 à 31, caractérisé en ce que la surface déflectrice (6) a un rayon de courbure compris entre 5 et 15 cm, notamment de l'ordre de 9 cm.

33. Véhicule selon l'une des revendications 1 à 32, caractérisé en ce que la surface déflectrice (6) et l'(les) aile(s) (7) s'étend(ent) sur une hauteur comprise entre 10 cm et 20 cm par rapport à la partie (19) de carrosserie s'étendant immédiatement à l'avant de ladite place avant (4, 5).

34. Véhicule selon l'une des revendications 1 à 33, caractérisé en ce qu'il comporte un cache supérieur (28) destiné à coiffer l'aile (7) et la surface déflectrice (6).

35. Véhicule selon la revendication 34, caractérisé en ce que le cache (28) comporte au moins une bouche de sortie (32) du flux d'air dévié (9), en regard d'une place avant (4, 5).

36. Véhicule selon l'une des revendications 34 ou 35, caractérisé en ce que le bord arrière transversal libre de la bouche (32) définit le bord de fuite (17) de la surface déflectrice.

37. Véhicule selon l'une des revendications 34, 35 ou 36, caractérisé en ce que le cache (28) est incliné vers le bas et vers l'avant.

## Patentansprüche

1. Fahrzeug zum Fahren mit Unterschallgeschwindigkeit, umfassend:
- Mittel, die wenigstens einen Vordersitz für wenigstens einen Insassen definieren, mit einer genormten Augenlagezone (11), die zwischen einer unteren (8) Horizontalebene und einer oberen (15) Horizontalebene liegt, wobei die genannten Mittel vor der genannten genormten Augenlagezone offen sind, wobei das Fahrzeug keine Windschutzscheibe aufweist,
- eine Vorrichtung zum Abweisen von Luft, umfassend eine Abweisfläche (6), die an dem Fahrzeug vor wenigstens einem Vordersitz (4, 5) befestigt und mit einem Frontabschnitt (18) der Karosserie und/oder des Fahrwerks verbunden ist, der während der Fahrt des Fahrzeugs einen relativen Luftstrom (10) empfängt, wobei diese Abweisfläche (6) allgemein wenigstens im wesentlichen in der Richtung quer zum Fahrzeug und in Längsrichtung gesehen am hinteren Teil des genannten Frontabschnitts (18) der Karosserie verläuft und mit einem geraden Abschnitt profiliert ist, der senkrecht longitudinal konkav mit nach vorne gerichteten Konkavitäten verläuft, und einen oberen Entweichungsrand (17) aufweist, der so nach oben gerichtet ist, dass wenigstens ein erheblicher Teil des relativen Luftstroms (10) über diesen Entweichungsrand (17) der Abweisfläche (6) entweicht,
- wobei die Abweiservorrichtung (6, 7) außerdem wenigstens einen Flügel (7) mit allgemein konkav gekrümmtem Profil umfasst, dessen Konkavitäten nach vorne gerichtet sind und der eine Vorderkante (24), die sich weiter aufwärts in dem relativen Luftstrom (10) befindet, und einen Entweichungsrand (23) aufweist, der sich weiter abwärts in dem relativen Luftstrom (10) befindet, und der an dem Fahrzeug in dem genannten relativen Luftstrom (10) unmittelbar oberhalb in einem Abstand gegenüber und in der Nähe der Abweisfläche (6) befestigt ist,
- wobei die Vorderkante (24) des am weitesten oberhalb befindlichen Flügels (7) gegenüber und über der Abweisfläche (6) verläuft,
- wobei sich der am weitesten abwärts im Luftstrom befindliche Entweichungsrand (23) des Flügels (7) wenigstens im wesentlichen vorwärts gegenüber und in einem Abstand von der Abweisfläche (6) befindet,
- wobei die Abweisfläche (6) und jeder Flügel (7) unter der genannten unteren Horizontalebene (8) durch die genannte genormte Augenlagezone (11) verläuft,
- wobei der Abstand zwischen der Vorderkante (24) des am weitesten oberhalb befindlichen Flügels (7) und der Abweisfläche (6) geringer ist als der Abstand zwischen dem Entweichungsrand (23) des am weitesten unterhalb befindlichen Flügels (7) und der Abweisfläche (6), wobei die Abweisfläche (6) und jeder Flügel (7) so gestaltet sind, dass ein Luftstrom entsteht, der abgelenkt wird und laminar nach oben vor der genannten genormten Augenlagezone (11) her und über der oberen Horizontalebene (15) mit einer Energie passiert, die ausreicht, um wenigstens den größten Teil des relativen Luftstroms (10) über der genannten genormten Augenlagezone (11) abzuweisen, in der sich die Luft wenigstens im wesentlichen im Ruhezustand befindet.

2. Fahrzeug nach Anspruch 1, dadurch gekennzeichnet, dass die Abweiservorrichtungsbaugruppe (6, 7), die aus der Abweisfläche (6) und dem/den Flügel(n) (7) besteht, unter einer Ebene (16) verläuft, die als die Untergrenze (16) des genormten Blickfeldes bezeichnet wird, durch die genannte genormte Augenlagezone (11) passiert und den genannten Frontabschnitt (18) der Karosserie tangiert.

3. Fahrzeug nach einem der Ansprüche 1 und 2, dadurch gekennzeichnet, dass der Entweichungsrand (17) der Abweisfläche (6) wenigstens im wesentlichen vertikal gerichtet ist.

4. Fahrzeug nach einem der Ansprüche 1 bis 3, dadurch gekennzeichnet, dass der Entweichungsrand (17) der Abweisfläche (6) einen Winkel von weniger als 10° mit der Vertikalrichtung bildet.

5. Fahrzeug nach einem der Ansprüche 1 bis 4, dadurch gekennzeichnet, dass der am weitesten unterhalb befindliche Entweichungsrand (23) wenigstens im wesentlichen vorwärts gegenüber dem Entweichungsrand (17) der Abweisfläche verläuft.

6. Fahrzeug nach einem der Ansprüche 1 bis 5, dadurch gekennzeichnet, dass die Abweisfläche (6) einstückig fest am quer verlaufenden Frontabschnitt (18) der Karosserie und/oder des Fahrgestells befestigt ist.

7. Fahrzeug nach einem der Ansprüche 1 bis 6, bei dem der genannte Frontabschnitt (18) der Karosserie vor dem/den Vordersitz(en) (4, 5) verläuft und dabei eine durchgehende Fläche wenigstens im wesentlichen horizontal zwischen dem/den Vordersitz(en) (4, 5) und dem Frontende (2) des Fahrzeugs (1) bildet, dadurch gekennzeichnet, dass die Abweisfläche (6) in Bezug auf den genannten Frontabschnitt (18) der Fahrzeugkarosserie nach oben auskragend in dem relativen Luftstrom (10) verlduft, der entlang dieses quer verlaufenden Frontabschnitts (18) der Karosserie entsteht.

8. Fahrzeug nach Anspruch 7, dadurch gekennzeichnet, dass die Abweisfläche (6) unmittelbar vor dem genannten Vordersitz (4, 5) in der Rückwärtsverlängerung eines hinteren Teils (19) wenigstens im wesentlichen horizontal zum Frontabschnitt (18) der Karosserie verläuft, und dadurch, dass die Abweisfläche (6) einen vorderen Verbindungsteil (20) umfasst, der wenigstens im wesentlichen horizontal verläuft und fortlaufend tangential in der Rückwärtsverlängerung des hinteren Teils (19) des Frontabschnitts (18) der Karosserie befestigt ist.

9. Fahrzeug nach einem der Ansprüche 1 bis 8, dadurch gekennzeichnet, dass die Abweiservorrichtungsbaugruppe (6, 7), die von der Abweisfläche (6) und dem/den Flügel(n) (7) gebildet wird, wenigstens im wesentlichen über die gesamte Breite jedes Vordersitzes (4, 5) verläuft.

10. Fahrzeug nach einem der Ansprüche 1 bis 8, dadurch gekennzeichnet, dass die Abweiservorrichtungsbaugruppe (6, 7), die von der Abweisfläche (6) und dem/den Flügel(n) (7) gebildet wird, wenigstens im wesentlichen über die gesamte Breite des Fahrzeugs (1) verläuft.

11. Fahrzeug nach einem der Ansprüche 1 bis 10, dadurch gekennzeichnet, dass die Abweisfläche (6) mit einem geraden Abschnitt profiliert ist, der vertikal longitudinal gekrümmt verläuft, und dadurch, dass der/die Flügel (7) ein Profil aufweist/en, das wenigstens im wesentlichen dem der Abweisfläche (6) entspricht.

12. Fahrzeug nach einem der Ansprüche 1 bis 11, dadurch gekennzeichnet, dass jeder Flügel (7) ein festes Schaufelkrümmungsprofil mit einer konkaven Wölbung und mit einer konvexen Wölbung aufweist.

13. Fahrzeug nach einem der Ansprüche 1 bis 12, dadurch gekennzeichnet, dass der der Abweisfläche (6) am nächsten liegende Flügel (7) in einem Abstand von 1 cm bis 20 cm von der Abweisfläche (6) verläuft.

14. Fahrzeug nach einem der Ansprüche 1 bis 13, dadurch gekennzeichnet, dass der Abstand, der den/die Flügel (7) und die Abweisfläche (6) trennt, über die gesamte Abweisfläche (6) in Querrrichtung des Fahrzeugs wenigstens im wesentlichen gleich ist.

15. Fahrzeug nach einem der Ansprüche 1 bis 14, dadurch gekennzeichnet, dass die Fläche der Eintrittssektion, die zwischen der Vorderkante (24) des/der Flügel(s) (7) und dem der Abweisfläche (6) am nächsten liegenden Teil definiert wird, kleiner ist als die der Austrittssektion, die zwischen dem Entweichungsrand (23) des/der Flügel(s) (7) und dem der Abweisfläche (6) am nächsten liegenden Teil definiert wird.

16. Fahrzeug nach einem der Ansprüche 1 bis 15, dadurch gekennzeichnet, dass der Abstand zwischen der Nulllinie (25) der Vorderkante (24) des am weitesten oberhalb befindlichen Flügels (7) und der Abweisfläche (6) 1 cm bis 5 cm, insbesondere etwa 3 cm beträgt.

17. Fahrzeug nach einem der Ansprüche 1 bis 16, dadurch gekennzeichnet, dass der Abstand zwischen dem Entweichungsrand (23) des am weitesten unterhalb befindlichen Flügels (7) und der Abweisfläche 3 cm bis 10 cm, insbesondere etwa 6 cm beträgt.

18. Fahrzeug nach einem der Ansprüche 1 bis 17, dadurch gekennzeichnet, dass es einen einzigen Flügel (7) umfasst, der eine nach vorne gerichtete konkave Wölbung (27) und eine konvexe Wölbung (26) aufweist, die vor und gegenüber der Abweisfläche (6) ausgerichtet ist.

19. Fahrzeug nach einem der Ansprüche 11 und 18, dadurch gekennzeichnet, dass die Krümmung der konvexen Wölbung (26) des Flügels (7) gleich oder geringer ist als die der Abweisfläche (6).

20. Fahrzeug nach Anspruch 19, dadurch gekennzeichnet, dass die Krümmung der konvexen Wölbung (26) des Flügels (7) wenigstens im wesentlichen gleich der der Abweisfläche (6) ist.

21. Fahrzeug nach einem der Ansprüche 1 bis 17, dadurch gekennzeichnet, dass es mehrere ähnliche Flügel (7a, 7b, 7c, 7d) aufweist, die wenigstens im wesentlichen parallel zueinander nebeneinander liegend verlaufen und zwischen sich ein Gitter von Flügeln bilden, durch das der relative Luftstrom (10) strömt, der nach oben abgelenkt wird.

22. Fahrzeug nach einem der Ansprüche 1 bis 17, dadurch gekennzeichnet, dass es zwei Flügel (7a, 7b) aufweist, nämlich einen unteren Vorderflügel (7a), der am weitesten vorne und unten angeordnet ist und ein Profil aufweist, dessen Neigungswinkel (αa) in Bezug auf die horizontale Längsrichtung kleiner als 45° ist, insbesondere etwa 15° beträgt, und einen oberen Hinterflügel (7b), der am weitesten nach hinten und oben angeordnet ist und ein Profil aufweist, das wenigstens im wesentlichen senkrecht ausgerichtet ist.

23. Fahrzeug nach Anspruch 22, dadurch gekennzeichnet, dass der Entweichungsrand (23) des am weitesten unterhalb befindlichen Flügels (7b) in Bezug auf die Senkrechtrichtung in einem Winkel (βb) zwischen 0 und 45°, insbesondere von etwa 30° nach vorne geneigt ist.

24. Fahrzeug nach einem der Ansprüche 22 und 23, dadurch gekennzeichnet, dass an der Vorderkante (24) des am weitesten oberhalb befindlichen Flügels (7a) in Bezug auf den relativen Luftstrom (10) ein geringer Einfallswinkel von weniger als 10°, insbesondere von null vorliegt.

25. Fahrzeug nach einem der Ansprüche 22 bis 24, dadurch gekennzeichnet, dass der obere Hinterflügel (7b) ein Profil aufweist, dessen Neigungswinkel (αb) in Bezug auf die Senkrechtrichtung kleiner als 5° ist.

26. Fahrzeug nach einem der Ansprüche 22 bis 25, dadurch gekennzeichnet, dass der obere Hinterflügel (7b) ein Profil hat, dessen Neigungswinkel (αb) in Bezug auf die Senkrechtrichtung negativ ist, wobei sich der Entweichungsrand (23) weiter vorne befindet als die Nulllinie der Vorderkante (24b).

27. Fahrzeug nach einem der Ansprüche 22 bis 26, dadurch gekennzeichnet, dass der Entweichungsrand (23a) des unteren Vorderflügels (7a) einen Winkel (βb) zwischen 20° und 60°, insbesondere von etwa 45°, in Bezug auf die horizontale Längsrichtung bildet.

28. Fahrzeug nach einem der Ansprüche 22 bis 27, dadurch gekennzeichnet, dass die Nulllinie (25b) der Vorderkante (24b) des oberen Hinterflügels (7b) einen Winkel (γb) von 10° bis 45°, insbesondere von etwa 30°, in Bezug auf die Vertikalrichtung bildet.

29. Fahrzeug nach einem der Ansprüche 22 bis 28, dadurch gekennzeichnet, dass der Entweichungsrand (23a) des unteren Vorderflügels (7a) unmittelbar unter der Vorderkante (24b) des oberen Hinterflügels (7b) verläuft.

30. Fahrzeug nach einem der Ansprüche 22 bis 29, dadurch gekennzeichnet, dass der Entweichungsrand (23a) des unteren Vorderflügels (7a) wenigstens im wesentlichen senkrecht zur Vertikalrichtung tangential zur Wölbung (26b) des oberen Hinterflügels (7b) verläuft.

31. Fahrzeug nach einem der Ansprüche 22 bis 30, dadurch gekennzeichnet, dass der Entweichungsrand (23a) des unteren Vorderflügels (7a) einen Abstand von 3 mm bis 20 mm, insbesondere von 5 mm bis 10 mm, von der Vorderkante (24b) des oberen Hinterflügels (7b) hat.

32. Fahrzeug nach einem der Ansprüche 1 bis 31, dadurch gekennzeichnet, dass die Abweisfläche (6) einen Krümmungsbereich von 5 bis 15 cm, insbesondere von etwa 9 cm hat.

33. Fahrzeug nach einem der Ansprüche 1 bis 32, dadurch gekennzeichnet, dass die Abweisfläche (6) und der/die Flügel (7) auf einer Höhe von 10 cm bis 20 cm in Bezug auf den Teil (19) der Karosserie verläuft/verlaufen, der sich unmittelbar vor dem genannten Vordersitz (4, 5) erstreckt.

34. Fahrzeug nach einem der Ansprüche 1 bis 33, dadurch gekennzeichnet, dass es eine obere Verkleidung (28) aufweist, die den Flügel (7) und die Abweisfläche (6) verdeckt.

35. Fahrzeug nach Anspruch 34, dadurch gekennzeichnet, dass die Abdeckung (28) wenigstens eine Auslassöffnung (32) für eine abgeleitete Luftströmung (9) gegenüber dem Vordersitz (4, 5) aufweist.

36. Fahrzeug nach einem der Ansprüche 34 und 35, dadurch gekennzeichnet, dass der freie hintere Querrand der Auslassöffnung (32) den Entweichungsrand (17) der Abweisfläche definiert.

37. Fahrzeug nach einem der Ansprüche 34, 35 und 36, dadurch gekennzeichnet, dass die Abdeckung (28) nach unten und nach vorne geneigt ist.

## Claims

1. Vehicle designed to travel at subsonic speed, comprising:
- means which define at least one front seat for at least one occupant, with a standardised eye-position area (11), which is located between a lower horizontal plane (8) and an upper horizontal plane (15), the said means being open to the front of the said standardised eye-position area, the vehicle being without a front windscreen;
- an air-deflection device comprising a deflection surface (6), which is secured to the vehicle, to the front of at least one front seat (4, 5), and is connected to a front portion (18) of bodywork and/or chassis, which receives a corresponding air current (10) when the vehicle is travelling, this deflection surface (6) extending globally at least substantially in the transverse direction of the vehicle, and in the extension towards the rear of the said front portion (18) of bodywork, and being profiled with a concave longitudinal vertical regular straight cross-section, with concavity oriented towards the front, and having an upper trailing edge (17) which is oriented upwards, such that at least a substantial portion of corresponding air current (10) escapes above this trailing edge (17) of the deflection surface (6);
- the deflection device (6, 7) additionally comprising at least one wing (7) with a curved profile, which is globally concave with concavity oriented upwards, having a leading edge (24) which is disposed furthest upstream in the corresponding air current (10), and a trailing edge (23) which is disposed furthest downstream in the corresponding air current (10), and being secured to the vehicle in the said corresponding air current (10), immediately upstream from, spaced from, opposite, and in the vicinity of the deflection surface (6);
- the leading edge (24) of the wing (7), which is furthest upstream, extending opposite and above the deflection surface (6);
- the trailing edge (23) of the wing (7), which is furthest downstream in the air current, being at least substantially opposite, to the front of, and spaced from the deflection surface (6);
- the deflection surface (6) and each wing (7) extending below the said lower horizontal plane (8) which passes through the said standardised eye-position area (11) ;
- the distance between the leading edge (24) of the wing (7) which is furthest upstream, and the deflection surface (6), being less than the distance between the trailing edge (23) of the wing (7) which is furthest downstream and the deflection surface (6), the deflection surface (6) and each wing (7) being designed to form an air flow which is deflected and flows upwards in a laminar manner, to the front of the said standardised eye-position area (11), and above the said upper horizontal plane (15), with sufficient energy to deflect at least the substantial portion of corresponding air current (10) above the standardised eye-position area (11), in which the air is at least substantially at rest.

2. Vehicle according to claim 1, characterised in that the deflection device assembly (6, 7) formed by the deflection surface (6) and the wing(s) (7) extends beneath a plane (16), which is known as the lower limit (16) of the standardised field of vision, which passes through the said standardised eye-position area (11), and is tangent relative to the said front portion (18) of bodywork.

3. Vehicle according to either of claims 1 or 2, characterised in that the trailing edge (17) of the deflection surface (6) is oriented at least substantially vertically.

4. Vehicle according to any one of claims 1 to 3, characterised in that the trailing edge (17) of the deflection surface (6) forms an angle of less than 10° relative to the vertical direction.

5. Vehicle according to any one of claims 1 to 4, characterised in that the trailing edge (23) which is located furthest downstream extends at least substantially opposite, and to the front of, the trailing edge (17) of the deflection surface.

6. Vehicle according to any one of claims 1 to 5, characterised in that the deflection surface (6) is integral in a sealed manner with the front transverse portion (18) of bodywork and/or chassis.

7. Vehicle according to any one of claims 1 to 6, wherein the said front portion (18) of bodywork extends to the front of the said front seats (4, 5), forming a continuous surface which is at least substantially horizontal between the front seats (4, 5) and the front end (2) of the vehicle (1), characterised in that the deflection surface (6) projects upwards relative to the said front portion (18) of bodywork of the vehicle, in the corresponding air current (10) created along this front transverse portion (18) of bodywork.

8. Vehicle according to claim 7, characterised in that the deflection surface (6) is secured immediately to the front of the said front seat (4, 5), in the extension towards the rear of a rear part (19) which is at least substantially horizontal, of the front portion (18) of bodywork, and in that the deflection surface (6) comprises a front connection part (20) which extends at least substantially horizontally, and is connected continuously, tangentially, in the extension towards the rear of the rear part (19) of the front portion (18) of bodywork.

9. Vehicle according to any one of claims 1 to 8, characterised in that the deflection device assembly (6, 7) formed by the deflection surface (6) and the wing(s) (7) extends at least substantially according to the entire width of each front seat (4, 5).

10. Vehicle according to any one of claims 1 to 8, characterised in that the deflection device assembly (6, 7) formed by the deflection surface (6) and the wing(s) (7) extends at least substantially according to the entire width of the vehicle (1).

11. Vehicle according to any one of claims 1 to 10, characterised in that the deflection surface (6) is profiled with a curved longitudinal vertical regular straight cross-section, and in that the wing(s) (7) has/have a profile which corresponds at least substantially to that of the deflection surface (6).

12. Vehicle according to any one of claims 1 to 11, characterised in that each wing (7) has a fixed-vane curved profile with a concave lower surface and a convex upper surface.

13. Vehicle according to any one of claims 1 to 12, characterised in that the wing (7) which is closest to the deflection surface (6) extends at a distance of between 1 cm and 20 cm from the deflection surface (6).

14. Vehicle according to any one of claims 1 to 13, characterised in that the distance which separates the wing(s) (7) and the deflection surface (6) is at least substantially the same along the entire deflection surface (6), according to the transverse direction of the vehicle.

15. Vehicle according to any one of claims 1 to 14, characterised in that the intake cross-section defined between the leading edge (24) of the wing(s) (7) and the closest part (20) of the deflection surface (6), has an area less than that of the outlet section defined between the trailing edge (23) of the wing(s) (7) and the closest part (17) of the deflection surface (6).

16. Vehicle according to any one of claims 1 to 15, characterised in that the distance between the neutral line (25) of the leading edge (24) of the wing (7) which is furthest upstream, and the deflection surface (6), is between 1 cm and 5 cm, and in particular approximately 3 cm.

17. Vehicle according to any one of claims 1 to 16, characterised in that the distance between the trailing edge (23) of the wing (7) which is furthest downstream, and the deflection surface, is between 3 cm and 10 cm, and in particular approximately 6 cm.

18. Vehicle according to any one of claims 1 to 17, characterised in that it comprises a single wing (7), which has a concave lower surface (27) oriented forwards, and a convex upper surface (26) oriented in front of, and opposite, the deflection surface (6).

19. Vehicle according to claims 11 and 18, characterised in that the curvature of the convex upper surface (26) of the wing (7) is less than, or equal to, that of the deflection surface (6).

20. Vehicle according to claim 19, characterised in that the curvature of the convex upper surface (26) of the wing (7) is at least substantially the same as that of the deflection surface (6).

21. Vehicle according to any one of claims 1 to 17, characterised in that it comprises a plurality of similar wings (7a, 7b, 7c, 7d), which extend at least substantially parallel to one another, are juxtaposed one adjacent to another, and define together a grid of wings, through which there passes the corresponding air current (10), which is deflected upwards.

22. Vehicle according to any one of claims 1 to 17, characterised in that it comprises two wings (7a, 7b), i.e. a lower front wing (7a) which is disposed further forward and towards the base, which has a profile, the setting angle (αa) of which relative to the longitudinal horizontal direction is less than 45°, in particular approximately 15°, and an upper rear wing (7b) which is disposed further towards the rear and towards the top, which has a profile oriented at least substantially vertically.

23. Vehicle according to claim 22, characterised in that the trailing edge (23) of the wing (7b) which is located further downstream is inclined forwards relative to the vertical direction, by an angle (βb) of between 0° and 45°, and in particular approximately 30°.

24. Vehicle according to claim 22 or 23, characterised in that the leading edge (24) of the wing (7a) which is located further upstream has a low incidence, of less than 10°, and in particular zero, relative to the corresponding air current (10).

25. Vehicle according to any one of claims 22 to 24, characterised in that the upper rear wing (7b) has a profile, the setting angle (αb) of which relative to the vertical direction is less than 5°.

26. Vehicle according to any one of claims 22 to 25, characterised in that the upper rear wing (7b) has a profile, the setting angle (αb) of which relative to the vertical direction is negative, the trailing edge (23) being placed further forward than the neutral line of the leading edge (24b).

27. Vehicle according to any one of claims 22 to 26, characterised in that the trailing edge (23a) of the lower front wing (7a) forms an angle (βa) of between 20° and 60°, in particular approximately 45°, relative to the longitudinal horizontal direction.

28. Vehicle according to any one of claims 22 to 27, characterised in that the neutral line (25b) of the leading edge (24b) of the upper rear wing (7b) forms an angle (γb) of between 10° and 45°, in particular approximately 30°, relative to the vertical direction.

29. Vehicle according to any one of claims 22 to 28, characterised in that the trailing edge (23a) of the lower front wing (7a) extends immediately below the leading edge (24b) of the upper rear wing (7b).

30. Vehicle according to any one of claims 22 to 29, characterised in that the trailing edge (23a) of the lower front wing (7a) extends at least substantially vertically relative to the vertical direction which is tangent to the upper surface (26b) of the upper rear wing (7b).

31. Vehicle according to any one of claims 22 to 30, characterised in that the trailing edge (23a) of the lower front wing (7a) is spaced from the leading edge (24b) of the upper rear wing (7b) by a distance of between 3 mm and 20 mm, in particular between 5 mm and 10 mm.

32. Vehicle according to any one of claims 1 to 31, characterised in that the deflection surface (6) has a radius of curvature of between 5 cm and 15 cm, in particular approximately 9 cm.

33. Vehicle according to any one of claims 1 to 32, characterised in that the deflection surface (6) and the wing(s) (7) extend to a height of between 10 cm and 20 cm relative to the part (19) of the bodywork which extends immediately to the front of the said front seat (4, 5).

34. Vehicle according to any one of claims 1 to 33, characterised in that it comprises an upper cover (28), which is designed to cover the wing (7) and the deflection surface (6).

35. Vehicle according to claim 34, characterised in that the cover (28) comprises at least one mouth (32) for output of the deflected air flow (9), opposite a front seat (4, 5).

36. Vehicle according to claim 34 or 35, characterised in that the free transverse rear edge of the mouth (32) defines the trailing edge (17) of the deflection surface.

37. Vehicle according to any one of claims 34, 35 or 36, characterised in that the cover (28) is inclined downwards and forwards.
